# EUROPÄISCHE PATENTSCHRIFT

(11) **EP 0 620 141 B1**
(45) Veröffentlichungstag und Bekanntmachung des Hinweises auf die Patenterteilung: **08.01.1997**
(21) Anmeldenummer: 94104183.2
(22) Anmeldetag: 17.03.1994
(51) Int. Cl.: B60R 22/34

(54) **Anordnung zur Befestigung eines Gurtbandes an einer Welle eines Sicherheitsgurtaufrollers**
A device for connecting a belt to a spindle of a seat belt retractor
Dispositif de fixation d'une sangle sur la bobine d'un enrouleur de ceinture de sécurité

(30) Priorität: 06.04.1993 DE 9305244 U
(43) Veröffentlichungstag der Anmeldung: 19.10.1994
(73) Patentinhaber: TRW Occupant Restraint Systems GmbH, 73553 Alfdorf (DE)
(72) Erfinder: Kleinhans, Klaus, D-73527 Schwäbisch Gmünd (DE)
(74) Vertreter: Degwert, Hartmut, Dipl.-Phys.

(56) Entgegenhaltungen:
- DE-A- 2 343 914
- DE-A- 2 704 084
- FR-A- 2 401 671
- GB-A- 2 024 607
- GB-A- 2 174 590

## Beschreibung

Die Erfindung betrifft eine Anordnung zur Befestigung eines Gurtbandes an einer Welle eines Sicherheitsgurtaufrollers, die einen radialen Schlitz aufweist, durch den ein Endbereich des Gurtbandes hindurchgeführt ist, der einen ersten, in den Schlitz hineingeführten Abschnitt, einen zweiten, ein quer zur Gurtbandslängsrichtung verlaufendes Element umschlingenden Abschnitt und einen sich daran anschließenden, parallel zu dem ersten Abschnitt verlaufenden Endabschnitt aufweist, wobei das quer verlaufende Element in einem erweiterten ersten Teil des Schlitzes, der in einen engeren zweiten Teil des Schlitzes einmündet, angeordnet ist.

Eine Anordnung dieser Art ist beispielsweise aus der DE-AS 25 56 409 bekannt. Im Gegensatz zu anderen herkömmlichen Gurtbandbefestigungen ist bei dieser Anordnung keine Naht erforderlich, um das Gurtband an der Welle des Gurtaufrollers zu befestigen. Der Stab ist dabei als Klammer mit U-förmigem Querschnitt ausgebildet. Zwischen den beiden Schenkeln der Klammer ist das Gurtbandende eingeklemmt. Die Klammer ist in den ersten Teil des Schlitzes so eingesetzt, daß das Gurtband aus der Klammer, unter einem Schenkel derselben hindurch und um die Klammer herum in den engeren zweiten Teil des Schlitzes läuft.

Eine Anordnung dieser Art ist weiterhin aus der gattungsbildenden GB-A-2 174 590 bekannt. Bie dieser Anordnung ist das Element als Halteteil mit einer sich in den zweiten Teil des Schlitzes hineinerstreckenden Lasche und einem im ersten Teil des Schlitzes angeordneten Kopf ausgebildet. Die Lasche ist auf einer Seite mit Haltezähnen versehen, zwischen denen und einer Wandung des zweiten Teiles des Schlitzes der Endabschnitt des Gurtbandes eingeklemmt werden.

Der Erfindung liegt die Aufgabe zugrunde, eine Anordnung der eingangs angegebenen Art zu schaffen, bei der bei gleicher Haltekraft der Befestigung die Belastungen auf das Gurtband vermindert sind.

Diese Aufgabe wird bei einer Anordnung der eingangs angegebenen Art erfindungsgemäß dadurch gelöst, daß der erste Abschnitt und der Endabschnitt des Gurtbandes in dem zweiten Teil des Schlitzes durch Flächenpressung in Richtung der Gurtbanddicke gehalten sind. Auf diese Weise wird die Belastbarkeit des Gurtbandes in der Welle des Gurtaufrollers erhöht. Neben der bekannten Umschlingungsreibung, die die Haltekraft, mit der das Gurtband in dem Schlitz gehalten wird, nach einer exponentiellen Gesetzmäßigkeit verstärkt, wirkt nun noch im zweiten Teil des Schlitzes eine Preßkraft zusätzlich zur Haltekraft auf das Gurtband ein.

Diese Preßkraft kann einfach insbesondere dadurch erzeugt werden, daß mindestens ein Spreizelement in den engeren Teil des Schlitzes eingeführt wird und das Gurtband im Zusammenwirken mit der den Schlitz im zweiten Teil begrenzenden Wandung preßt. Das Spreizelement drückt dabei das Gurtband entsprechend elastisch zusammen, so daß eine Bewegung des Gurtbandes in dem Schlitz verhindert wird.

Als vorteilhafte Ausführungsformen des Spreizelements sind grundsätzlich zwei verschiedene Ausbildungen zweckmäßig.

Gemäß einer ersten bevorzugten Ausführungsform bildet ein erster Bereich des Spreizelements das quer verlaufende Element sowie ein zweiter Bereich erstreckt sich in den zweiten Teil des Schlitzes hinein. Der Endabschnitt des Gurtbandes ist um das im Schlitz angeordnete freie Ende des Spreizelements herumgeschlungen. Durch diese weitere Umschlingung wird der Halt des Gurtbandes in dem Schlitz zusätzlich erhöht. Dadurch kann das Spreizelement mit dem Stab und dem ersten und zweiten Abschnitt sowie dem Endabschnitt einfach in den Schlitz der Welle hineingedrückt und somit das Gurtband in dem zweiten Teil des Schlitzes in Zusammenwirken mit der Wandung gepreßt werden.

Gemäß einer zweiten bevorzugten Ausführungsform liegt das Gurtband unmittelbar mit seiner Schlingeninnenfläche an einem das quer verlaufende Element bildenden Stab an und das Spreizelement ist U-förmig ausgebildet und umgreift die Abschnitte des Gurtbandes im Schlitz. Auch hierdurch wird eine einfache Montage ermöglicht. Zur Montage wird das Gurtband zunächst um den Stab herumgelegt. Das U-förmige Spreizmittel wird dann auf das Gurtband von außen aufgeschoben, so daß es das um den Stab geschlungene Gurtband umgreift. Diese Einheit aus Gurtband, Stab und Spreizmittel wird nunmehr lediglich in den zweiten Teil des Schlitzes hinein gedrückt. Dabei werden die beiden Gurtbandteile gegeneinandergepreßt. Dies kann noch dadurch verstärkt werden, wenn das Spreizelement an seiner Außenfläche keilförmige Erhebungen aufweist.

Weiterhin kann die Befestigungssicherheit des Gurtbandes noch dadurch einfach erhöht werden, wenn die an dem Gurtband anliegende Fläche des Spreizelements Haltemittel aufweist, die einer Bewegung des Gurtbandes relativ zum Spreizelement entgegenwirken.

Weitere vorteilhafte Merkmale der Erfindung ergeben sich aus der Beschreibung der bevorzugten Ausführungsformen der Erfindung unter Bezugnahme auf die Zeichnung. Es zeigen:
Fig. 1 einen Teilquerschnitt durch die Welle eines Gurtaufrollers mit einer ersten Ausführungsform einer erfindungsgemäßen Befestigung des Gurtbandes;
Fig. 2 eine Draufsicht auf ein Spreizelement gemäß einer zweiten Ausführungsform der Erfindung;
Fig. 3 eine Seitenansicht von Fig. 2;
Fig. 4 eine Draufsicht auf ein Spreizelement gemäß einer dritten Ausführungsform der Erfindung;
Fig. 5 eine Seitenansicht von Fig. 4; und
Fig. 6 einen Teilquerschnitt durch die Welle eines Gurtaufrollers mit einer vierten Ausführungsform einer erfindungsgemäßen Befestigung des Gurtbandes.

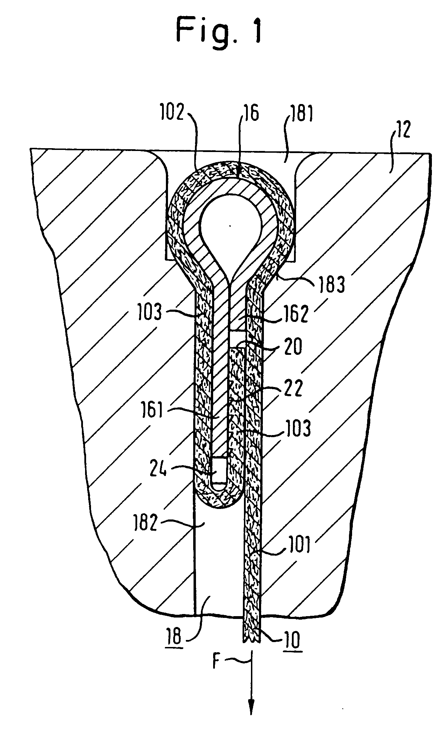

Gemäß Fig. 1 ist ein Gurtband 10 an einer Achse oder Welle 12 befestigt. Vorzugsweise gehört das Gurtband 10 zu einem Fahrzeugsicherheitsgurt, und die Welle 12 ist Teil einer Gurtbandaufrollvorrichtung eines Fahrzeugsicherheitsgurtsystems. In Fig. 1 ist neben dem Gurtband 10 und der Welle 12 ein Spreizelement 16 und ein Schlitz 18 dargestellt.

Der radiale Schlitz 18 verläuft durch die Welle 12 hindurch und ist in einen ersten erweiterten Teil 181, einen zweiten engeren Teil 182 und einen von dem erweiterten Teil 181 sich in Richtung auf den engeren Teil 182 verjüngenden Zwischenteil 183 unterteilt. Das Spreizelement 16 ist in Richtung auf den engeren Teil 182 des Schlitzes 18 keilförmig ausgebildet und weist zwei sich in den Teil 182 des Schlitzes 18 erstreckende Schenkel 161 und 162 auf. Dabei ist der Schenkel 162 gegenüber dem Schenkel 161 in seiner Erstreckung in den engeren Teil 182 des Schlitzes 18 hinein verkürzt ausgebildet. Die beiden Schenkel 161 und 162 liegen unmittelbar aufeinander.

Das Gurtbandende 20 schließt sich an den verkürzten Schenkel 162 des Spreizelements 16 an, ist um das freie Ende des Schenkels 162 herumgeschlungen, verläuft in Richtung auf das entgegengesetzte Ende des Spreizelements 16, ist um das Spreizelement 16 wiederum herumgeschlungen und verläuft dann schließlich durch den Schlitz 18 hindurch in Gurtbandlängsrichtung F. Das Gurtband 10 weist somit einen ersten in den Schlitz 18 hineingeführten Abschnitt 101, einen zweiten, das Spreizelement 16 umschlingenden Abschnitt 102 und einen sich daran anschließenden, parallel zu dem ersten Abschnitt verlaufenden Endabschnitt 103 auf, wobei der Endabschnitt 103 um das freie Ende des Schenkels 161 herum geschlungen ist und sich bis zum freien Ende des verkürzt ausgebildeten Schenkels 162 erstreckt.

Die Schlitzbreite im engeren Teil 182 ist geringer als die Summe aus der dreifachen Dicke des Gurtbandes 10 und der Dicke des Schenkels 161 des Spreizelements 16. Der Schenkel 162 des Spreizelements 16 weist eine geringere Dicke als das zusammengepreßte Gurtband 10 auf. Somit ist das Gurtband 10 in der in Fig. 1 dargestellten Anordnung in dem engeren Teil 182 des Schlitzes 18 zusammengepreßt.

Als zusätzliche Sicherheit gegen ein Verrutschen des Gurtbandes 10 in Gurtbandlängungsrichtung F sind auf der Oberfläche des Spreizelements 16 spitze Vorsprünge 22 vorgesehen, die einer Bewegung in Gurtbandlängsrichtung F entgegenwirken. Die Vorsprünge 22 sind dabei auf der Seite des Schenkels 161 des Spreizelements 16 angeordnet, auf der sich das Ende 20 des Gurtbandes 10 befindet.

Die Oberfläche des keilförmigen Teils des Spreizelements 16 ist parallel zu der Oberfläche des jeweils gegenüberliegenden, sich verjüngenden Zwischenteils 183 des Schlitzes 18. Dadurch wird bei Belastung in Gurtbandlängsrichtung F das Spreizelement 16 durch das Gurtband 10 in Gurtbandlängsrichtung F gepreßt, so daß in dem Zwischenteil 183 das Gurtband 10 ebenfalls gepreßt ist.

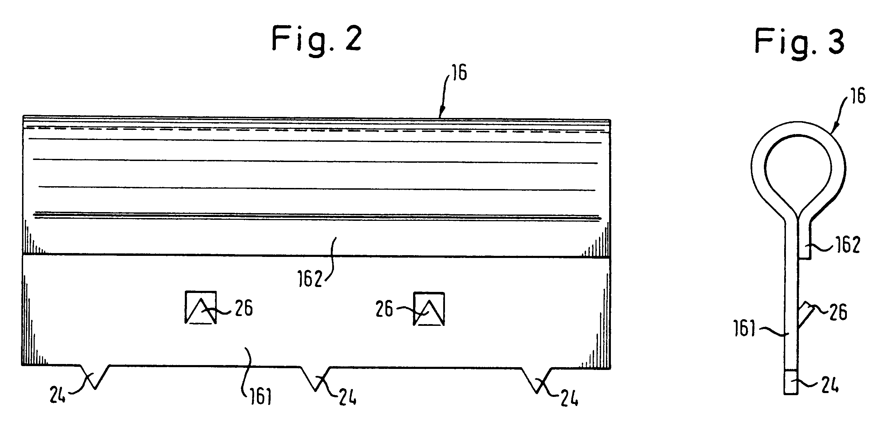

Um das Gurtband 10 weiter zu sichern, ist die Oberfläche des Spreizelements 16 gerändelt ausgebildet und das freie Ende weist in Gurtbandlängsrichtung F sich erstreckende spitze Zähne 24 auf. Die Ausbildung der spitzen Zähne 24 entspricht dabei der zweiten Ausführungsform des Spreizelements 16, die in den Figuren 2 und 3 dargestellt ist.

Die zweite Ausführungsform des Spreizelements 16 unterscheidet sich von der ersten Ausführungsform lediglich dadurch, daß keine spitzen Vorsprünge 22 vorgesehen sind, sondern ähnlich den spitzen Zähnen 24 ausgebildete Haken 26. Diese Haken 26 sind geneigt zum Schenkel 161 des Spreizelements 16 angeordnet und wirken einer Bewegung des Gurtbandes 10 in Gurtbandlängsrichtung F entgegen. Die Haken 26 greifen dafür in das Gurtband 10 ein.

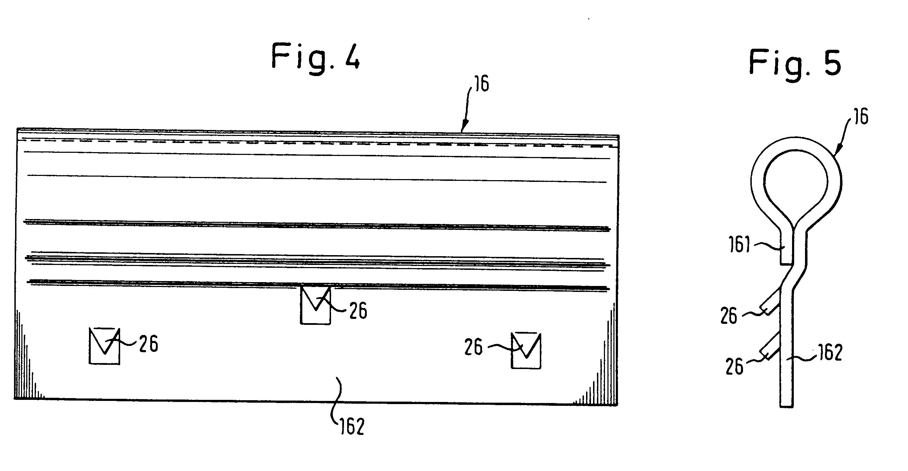

Eine dritte Ausführungsform eines Spreizelements 16 ist in den Figuren 4 und 5 dargestellt. Zum einen unterscheidet sich das Spreizelement 16 von dem Spreizelement gemäß der ersten Ausführungsform dadurch, daß der Schenkel 161 verkürzt ausgebildet ist und der längere Schenkel der Schenkel 162 ist. Dabei ist der Schenkel 162 derart in Richtung auf den ersten Schenkel 161 geformt, daß der Endbereich des Schenkels 162 mit dem Schenkel 161 fluchtet. Weiterhin sind keine Vorsprünge 24 vorgesehen. Das Gurtband 10, das aus Gründen der Übersicht hier nicht dargestellt ist, verläuft gemäß Fig. 5 von dem freien Ende des Schenkels 162, auf der linken Seite des Schenkels 162 in Richtung auf das gegenüberliegende Ende des Spreizelements 16, um dieses herum und anschließend in Gurtbandlähgsrichtung F. Deshalb sind die Haken 26 auf der anderen Seite des Schenkels 162 angeordnet und in die entgegengesetzte Richtung geneigt. Eine weitere Besonderheit dieser Ausführungsform ist, daß die Haken 26 in bezug auf die Längserstreckung des Spreizelements 16 versetzt angeordnet sind. Dadurch ergibt sich eine günstige Haltekraftverteilung am Gurtband 10, die ein Reißen des Gurtbandes 10 in diesem Abschnitt verhindert.

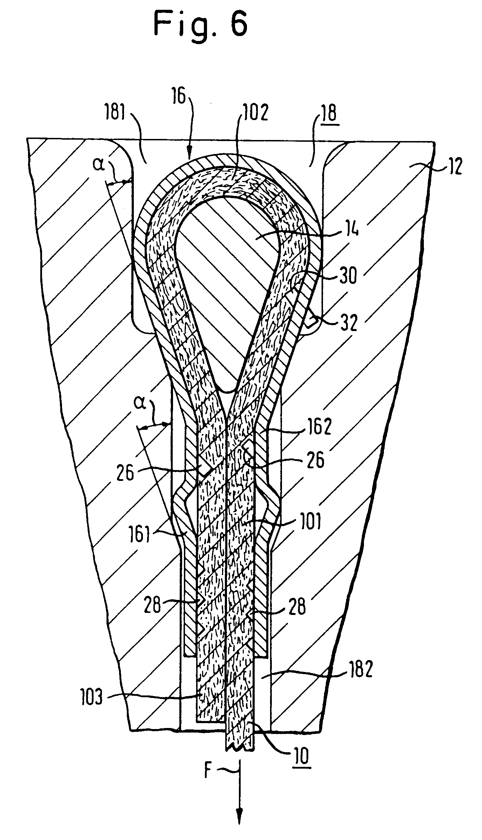

In Fig. 6 ist eine weitere Ausführungsform der Erfindung dargestellt. Wie schon in den Figuren 2 bis 5 werden auch hier für funktionsmäßig gleiche Teile die gleichen Bezugszeichen verwendet. Das Gurtband 10 liegt hierbei unmittelbar an einem quer zur Gurtbandlängsrichtung F verlaufenden Stab 14 an. Das Gurtband 10 weist entsprechend der Ausführungsform von Fig. 1 einen ersten Abschnitt 101, einen zweiten Abschnitt 102 und einen Endabschnitt 103 auf. Hier ist jedoch der Endabschnitt 103 nicht noch einmal um einen Bereich des Spreizelements 16 herumgeschlungen. Nach dem Stab 14 in Richtung der Gurtbandlängsrichtung F liegen die beiden Abschnitte 101 und 103 des Gurtbandes 10 gepreßt aufeinander.

Das Spreizelement 16 ist U-förmig ausgebildet und umgreift die Abschitte 101 bis 103 und somit auch den von dem Gurtband 10 umgebenen Stab 14. Die beiden Schenkel 161 und 162 des Spreizelements 16 sind gleich lang ausgebildet und weisen an ihrer Innenfläche die spitzen Haken 26 auf, die entsprechend der zweiten Ausführungsform ausgebildet und am Spreizelement 16 angeordnet sind. Zudem sind im Endbereich der Schenkel 161 und 162 quer zur Gurtbandlängsrichtung F hervorstehende Rippen 28 vorgesehen.

Bei dieser Ausführungsform ist der Teil 182 breiter ausgebildet als die Summe aus der doppelten Dicke des Gurtbandes 10, der Dicke des Schenkels 161 und der Dicke des Schenkels 162 des Spreizelements 16. Dafür sind die Schenkel 161, 162 in ihrer Mitte V-förmig nach außen geformt. Die den Teil 182 begrenzende Wandung drückt die Schenkel 161, 162 in diesem keilförmigen Zwischenbereich zusammen, da ihre absolute Breite geringfügig größer ist als die Breite des Teils 182 des Schlitzes 18. Über die Breite des Spreizelements 16 in diesem Bereich läßt sich die Preßkraft auf das Gurtband einfach einstellen.

Des weiteren weist das Spreizelement 16 im Bereich des Stabs 14 in das Gurtband 10 eingreifende Haken 30 sowie nach außen gerichtete Vorsprünge 32 auf. Die Vorsprünge 32 greifen in den ersten Teil 181 des Schlitzes 18 ein und fixieren das Spreizelement 16 in axialer Richtung.

In Fig. 6 sind weiterhin die Winkel α des Spreizelements 16 und des Stabs 14 angegeben. Dieser Stützwinkel α ist möglichst stumpf ausgeführt, da die Haltekraft des Gurtbandes 10 nach einer exponentiellen Gesetzmäßigkeit verstärkt ist, in die der Umschlingungswinkel als Exponent eingeht. Zur Erhöhung des Reibwertes µ ist die Oberfläche des Spreizelements 16 und der Abstützflächen der den Schlitz 18 begrenzenden Wandung aufgerauht, beispielsweise durch quer zur Gurtabzugsrichtung F verlaufende Rändel.

Wie aus der Zeichnung ohne weiteres ersichtlich ist, ist eine einfache Montage durch die erfindungsgemäße Ausbildung möglich. Der Stab 14, das um den Stab 14 gelegte Gurtband 10 sowie das Spreizelement 16 werden als Einheit in den Schlitz 18 einfach hineingedrückt.

Durch die erfindungsgemäße Ausbildung werden die vom Gesetz geforderten Bruchlastwerte des Gurtbandes 10 gewährleistet und die Befestigungssicherheit, also die Sicherheit gegen ein Lösen des Gurtbandes aus der Befestigungsanordnung, erhöht. Die Haken 26, 28, 30 können gemäß einer Abwandlung der dargestellten Ausführungsformen im Schnitt sägezahnförmig ausgebildet werden.

## Patentansprüche

1. Anordnung zur Befestigung eines Gurtbandes (10) an einer Welle (12) eines Sicherheitsgurtaufrollers, die einen radialen Schlitz (18) aufweist, durch den ein Endbereich des Gurtbandes (10) hindurchgeführt ist, der einen ersten, in den Schlitz (18) hineingeführten Abschnitt (101), einen zweiten, ein quer zur Gurtbandlängsrichtung (F) verlaufendes Element (14, 16) umschlingenden Abschnitt (102) und einen sich daran anschließenden, parallel zu dem ersten Abschnitt (101) verlaufenden Endabschnitt (103) aufweist, wobei das quer verlaufende Element (14, 16) in einem erweiterten ersten Teil (181) des Schlitzes (18), der in einen engeren zweiten Teil (182) des Schlitzes (18) einmündet, angeordnet ist, dadurch gekennzeichnet, daß der erste Abschnitt (101) und der Endabschnitt (103) des Gurtbandes (10) in dem zweiten Teil (182) des Schlitzes (18) durch Flächenpressung in Richtung der Gurtbanddicke gehalten sind.

2. Anordnung nach Anspruch 1, dadurch gekennzeichnet, daß mindestens ein Spreizelement (16) in den zweiten Teil (182) des Schlitzes (18) eingeführt ist und das Gurtband (10) in Zusammenwirken mit der den Schlitz (18) im zweiten Teil (182) begrenzenden Wandung preßt.

3. Anordnung nach Anspruch 2, gekennzeichnet durch eine Ausbildung des Spreizelements (16), bei der ein erster Bereich des Spreizelements (16) das quer verlaufende Element bildet sowie ein zweiter Bereich sich in den zweiten Teil (182) des Schlitzes (18) hineinerstreckt.

4. Anordnung nach Anspruch 3, dadurch gekennzeichnet, daß das Gurtband (10) unmittelbar mit seiner Schlingeninnenfläche an dem Spreizelement (16) anliegt.

5. Anordnung nach Anspruch 4, dadurch gekennzeichnet, daß der Endabschnitt (103) des Gurtbandes (10) um das im Schlitz (18) angeordnete freie Ende des Spreizelements (16) herumgeschlungen ist.

6. Anordnung nach Anspruch 4 und 5, dadurch gekennzeichnet, daß an dem freien Ende des Spreizelements (16) sich in Richtung der Gurtbandlängsrichtung (F) erstreckende Vorsprünge (24) vorgesehen sind.

7. Anordnung nach Anspruch 6, dadurch gekennzeichnet, daß die Vorsprünge (24) durch spitze Zähne gebildet sind.

8. Anordnung nach Anspruch 2, dadurch gekennzeichnet, daß ein Stab (14) das quer verlaufende Element bildet und das Spreizelement (16) so ausgebildet ist, daß ein erster Bereich des Spreizelements den Stab (14) umgibt sowie ein zweiter Bereich sich in den zweiten Teil (182) des Schlitzes (18) hineinerstreckt.

9. Anordnung nach Anspruch 8, dadurch gekennzeichnet, daß das Gurtband (10) unmittelbar mit seiner Schlingeninnenfläche an dem Stab (14) anliegt, das Spreizelement (16) U-förmig ausgebildet ist und beide Schenkel (161, 162) des Spreizelements (16) die Abschnitte (101, 102, 103) des Gurtbandes (10) umgreifen.

10. Anordnung nach Anspruch 9, dadurch gekennzeichnet, daß das Spreizelement (16) keilförmige, in Richtung auf die den Schlitz (18) begrenzende Wandung gerichtete Erhebungen aufweist.

11. Anordnung nach einem der Ansprüche 2 bis 10, dadurch gekennzeichnet, daß die an dem Gurtband (10) anliegende Fläche des Spreizelements (16) Haltemittel (22, 26, 28, 30) aufweist, die einer Bewegung des Gurtbandes (10) relativ zum Spreizelement (16) entgegenwirken.

12. Anordnung nach Anspruch 11, dadurch gekennzeichnet, daß die Haltemittel (22, 26, 28, 30) im Schnitt sägezahnförmig ausgebildet sind.

13. Anordnung nach Anspruch 11 oder 12 dadurch gekennzeichnet, daß an der an den) Gurtband (10) anliegenden Fläche des Spreizelements (16) spitze Erhebungen (28) vorgesehen sind.

14. Anordnung nach einem der Ansprüche 11 bis 13, dadurch gekennzeichnet, daß die Haltemittel durch quer zur Gurtbandlängsrichtung (F) verlaufende Rippen (28) gebildet sind.

15. Anordnung nach einem der vorangehenden Ansprüche, dadurch gekennzeichnet, daß die Oberfläche des Spreizelements (16) aufgerauht, insbesondere gerändelt, ausgebildet ist.

16. Anordnung nach einem der vorangehenden Ansprüche, dadurch gekennzeichnet, daß das quer verlaufende Element (14) keilförmig ausgebildet ist.

17. Anordnung nach einem der vorangehenden Ansprüche, dadurch gekennzeichnet, daß der Schlitz (18) zumindest bereichsweise an die Außenkontur der in den Schlitz (18) eingreifenden Einheit aus Spreizelement (16), quer verlaufenden Element (14) und Gurtband (10) angepaßt ausgebildet ist.

18. Anordnung nach Anspruch 16 und 17, dadurch gekennzeichnet, daß zwischen dem ersten Teil (181) des Schlitzes (18) und dem zweiten Teil (182) des Schlitzes (18) ein sich von dem ersten Teil (181) in Richtung auf den zweiten Teil (182) verjüngender Zwischenteil (183) vorgesehen ist.

## Claims

1. An assembly for fastening a belt webbing (10) to a shaft (12) of a seat belt retractor, said shaft having a radial slot (18) through which one end of said belt webbing (10) is inserted, the belt webbing having a first section (101) for insertion in said slot (18), and a second section (102) for wrapping around a member (14, 16) oriented transversely to the longitudinal direction of the belt webbing (F) and followed by an end section (103) extending parallel to said first section (101), said transverse member (14, 16) is arranged in an expanded first part (181) of said slot (18) merging in a narrower second part (182) of said slot (18), characterized in that said first section (101) and said end section (103) of said belt webbing (10) are held in said second part (182) of said slot (18) by surface pressure excerted in the direction of the belt webbing thickness.

2. An assembly as set forth in claim 1 wherein at least one spreader member (16) is intruded into said second part (182) and squeezes said belt webbing (10) by interacting with the wall defining said slot (18) in said second part (182).

3. An assembly as set forth in claim 2 wherein said spreader member (16) is configured so that a first region of said spreader memeber (16) forms the transverse member and a second region extends into said second part (182) of said slot (18).

4. An assembly as set forth in claim 3 wherein said belt webbing (10) directly contacts said spreader member (16) by its inner wrap surface.

5. An assembly as set forth in claim 4 wherein said end section (103) of said belt webbing (10) is wrapped around the free end of said spreader member (16) arranged in said slot (18).

6. An assembly as set forth in claims 4 and 5 wherein projections (24) are provided at the free end of said spreader member (16), which extend in the longitudinal direction (F) of said belt webbing.

7. An assembly as set forth in claim 6 wherein said projections (24) are formed by pointed teeth.

8. An assembly as set forth in claim 2 wherein a bar (14) forms the transverse member and said spreader member (16) is configured so that a first region of said spreader member surrounds said bar (14) and a second region extends into said second part (182) of said slot (18).

9. An assembly as set forth in claim 8 wherein said belt webbing (10) is in direct contact with said bar (14) by its wrapping inner surface, said spreader member (16) is configured U-shaped and both arms (161, 162) of said spreader member (16) clasp said sections (101, 102, 103) of said belt webbing (10).

10. An assembly as set forth in claim 9 wherein said spreader member (16) has wedge-shaped projections oriented in the direction of the wall defining said slot (18).

11. An assembly as set forth in claims 2 to 10 wherein the surface of said spreader member (16) in contact with said belt webbing (10) features holding means (22, 26, 28, 30) to counteract movement of said belt webbing (10) relative to said spreader member (16).

12. An assembly as set forth in claim 11 wherein said holding means (22, 26, 28, 30) have a sawtooth cross-section.

13. An assembly as set forth in claims 11 or 12 wherein the surface of said spreader member (16) in contact with said belt webbing (10) is provided projections (28).

14. An assembly as set forth in claims 11 to 13 wherein said holding means are formed by ribs (28) oriented transversely to the longitudinal direction (F) of said belt webbing.

15. An assembly as set forth in any of the above claims wherein the surface of said spreader member (16) is provided roughened, particularly knurled.

16. An assembly as set forth in any of the above claims wherein said transverse member (14) is formed wedge-shaped.

17. An assembly as set forth in any of the above claims wherein said slot (18) is shaped to match at least in part the outer contour of the unit comprising said spreader member (16), transverse member (14) and belt webbing (10) and engaging said slot (18).

18. An assembly as set forth in claims 16 to 17 wherein between said first part (181) of said slot (18) and the second part (182) of said slot (18) an intermediate part (183) tapered from said first part (181) in the direction of said second part (182) is provided.

## Revendications

1. Dispositif de fixation d'une sangle de ceinture (10) à un arbre (12) d'un enrouleur de ceinture de sécurité, ledit dispositif comprenant une fente radiale (18) à travers laquelle passe une zone d'extrémité de la sangle (10) de la ceinture, ladite zone d'extrémité comprenant une première portion (101) engagée dans la fente (18), une deuxième portion (102) entourant un élément (14, 16) disposé transversalement au sens longitudinal (F) de la sangle de la ceinture et une portion extrême (103) qui prolonge la précédente et s'étend parallèlement à la première portion (101), l'élément transversal (14, 16) étant disposé dans une première partie élargie (181) de la fente (18), qui débouche dans une deuxième partie plus étroite (182) de la fente (18), caractérisé en ce que la première portion (101) et la portion extrême (103) de la sangle (10) de la ceinture sont maintenues dans la deuxième partie (182) de la fente (18) par pression superficielle dans le sens de l'épaisseur de la sangle de la ceinture.

2. Dispositif selon la revendication 1, caractérisé en ce qu'au moins un élément d'écartement (16) est inséré dans la deuxième partie (182) de la fente (18) et comprime la sangle (10) de la ceinture en coopération avec la paroi délimitant la fente (18) dans la deuxième partie (182).

3. Dispositif selon la revendication 2, caractérisé par une conception de l'élément d'écartement (16) dans laquelle une première zone de l'élément d'écartement (16) forme l'élément transversal et une seconde zone pénètre dans la deuxième partie (182) de la fente (18).

4. Dispositif selon la revendication 3, caractérisé en ce que la sangle (10) de la ceinture est appliquée directement contre l'élément d'écartement (16) par la surface intérieure de sa boucle.

5. Dispositif selon la revendication 4, caractérisé en ce que la portion extrême (103) de la sangle (10) de la ceinture est enroulée autour de l'extrémité libre de l'élément d'écartement (16) disposée dans la fente (18).

6. Dispositif selon les revendications 4 et 5, caractérisé en ce que des saillies (24) s'étendant dans le sens longitudinal (F) de la sangle de la ceinture sont prévues à l'extrémité libre de l'élément d'écartement (16).

7. Dispositif selon la revendication 6, caractérisé en ce que les saillies (24) sont formées par des dents pointues.

8. Dispositif selon la revendication 2, caractérisé en ce qu'une barre (14) forme l'élément transversal, et l'élément d'écartement (16) est conçu de façon qu'une première zone de l'élément d'écartement entoure la barre (14) et qu'une seconde zone pénètre dans la deuxième partie (182) de la fente (18).

9. Dispositif selon la revendication 8, caractérisé en ce que la sangle (10) de la ceinture est directement appliquée contre la barre (14) par la surface intérieure de sa boucle, l'élément d'écartement (16) est conçu en forme de U et les deux branches (161, 162) de l'élément d'écartement (16) entourent les portions (101, 102, 103) de la sangle (10) de la ceinture.

10. Dispositif selon la revendication 9, caractérisé en ce que l'élément d'écartement (16) comporte des surélévations cunéiformes orientées en direction de la paroi qui délimite la fente (18).

11. Dispositif selon l'une des revendications 2 à 10, caractérisé en ce que la surface de l'élément d'écartement (16) appliquée contre la sangle (10) de la ceinture comporte des moyens de retenue (22, 26, 28, 30) qui s'opposent à un déplacement de la sangle (10) de la ceinture par rapport à l'élément d'écartement (16).

12. Dispositif selon la revendication 11, caractérisé en ce que, en coupe, les moyens de retenue (22, 26, 28, 30) sont en forme de dents de scie.

13. Dispositif selon la revendication 11 ou 12, caractérisé en ce que des surélévations pointues (28) sont prévues sur la surface de l'élément d'écartement (16) appliquée contre la sangle (10) de la ceinture.

14. Dispositif selon l'une des revendications 11 à 13, caractérisé en ce que les moyens de retenue sont formés par des nervures (28) s'étendant transversalement au sens longitudinal (F) de la sangle de la ceinture.

15. Dispositif selon l'une des revendications précédentes, caractérisé en ce que la surface de l'élément d'écartement (16) est de conception rugueuse, en particulier moletée.

16. Dispositif selon l'une des revendications précédentes, caractérisé en ce que l'élément transversal (14) est conçu en forme de coin.

17. Dispositif selon l'une des revendications précédentes, caractérisé en ce que la fente (18) est conçue, au moins par endroits, de manière à épouser le contour extérieur de l'unité qui est constituée de l'élément d'écartement (16), de l'élément transversal (14) et de la sangle (10) de la ceinture et qui pénètre dans la fente (18).

18. Dispositif selon les revendications 16 et 17, caractérisé en ce qu'entre la première partie (181) de la fente (18) et la deuxième partie (182) de la fente (18) est prévue une partie intermédiaire (183) qui se rétrécit de la première partie (181) vers la deuxième partie (182).
